# EUROPEAN PATENT APPLICATION

(11) **EP 4 068 241 A1**
(43) Date of publication of application: **05.10.2022**
(21) Application number: 21165860.4
(22) Date of filing: 30.03.2021
(51) Int. Cl.: G08G 1/16, B60W 30/14, B60W 30/095

(54) **DRIVING ASSISTANCE SYSTEM AND METHOD OF CONTROLLING AUTONOMOUS VEHICLES**

(71) Applicant: Siemens Industry Software NV, 3001 Leuven (BE)
(72) Inventor: Tong, Son, 3001 Leuven (BE)
(74) Representative: Maier, Daniel Oliver

(57) **Abstract**

Driving assistance systema and method of controlling at least one autonomous vehicle (112, 350) are disclosed. The method comprising determining one or more driving trajectories for at least one vehicle (370) in a region of interest (360) based on time-shifted step functions generated from a driving state of the at least one vehicle (370); selecting at least one driving trajectory from the driving trajectories based on a falsification optimization of the driving trajectories; and controlling the autonomous vehicle (112, 350) based on the at least one driving trajectory.

## Description

The present invention relates to controlling autonomous vehicles. Particularly, the present invention relates to controlling autonomous vehicles in case of cut-in or cut-out traffic conditions.

The advancement in control of vehicles has resulted in widespread adoption of driving assistance systems for vehicles. Vehicles with driving assistance systems may be referred to as autonomous vehicles. The driving assistance systems enable drivers to potentially take their eyes off the road and perform secondary tasks that may not be generally permitted while driving.

To ensure the safety of the drivers, the autonomous vehicle and traffic environment around the autonomous vehicle, several regulatory requirements or tests have been established. For example, Euro NCAP has developed tests to assess their performance in critical traffic scenarios simulated on a test track environment. Euro NCAP has developed tests to assess performance of the autonomous vehicles in critical traffic scenarios simulated on a test track environment.

The test results indicate that the most challenging tests for driving assistance systems are the "cut-in" and "cut-out" traffic scenarios. In the cut-in scenario, a car from the adjacent lane merges into the lane just in front of the autonomous vehicle. For the cut-out scenario, a car in front leaves the lane abruptly to avoid a stopped vehicle ahead, leaving the system only a short time to identify and respond to the situation. Currently, the cut-in and cut-out scenarios are generated by considering any possible driving trajectory associated with the vehicle cutting-in or cutting-out. However, this may result in the generation of multiple scenarios that require significant testing effort in terms of time and computation resources.

Accordingly, the driving assistance systems and methods may benefit from improvements to the method and system for generating testing scenarios, particularly related to cut-in and cut-out traffic conditions.

The object of the present invention is to provide an improved scenario generation system and method that addresses cut-in and cut-out traffic conditions and thereby improves control of the autonomous vehicles for such traffic conditions.

The object is achieved for example by a computer implemented method of controlling at least one autonomous vehicle, the method comprising: determining one or more driving trajectories for at least one vehicle in a region of interest based on time-shifted step functions generated from a driving state of the at least one vehicle; selecting at least one driving trajectory from the driving trajectories based on a falsification optimization of the driving trajectories; and controlling the autonomous vehicle based on the at least one driving trajectory.

In another example, the object is achieved by a driving assistance system for controlling an autonomous vehicle, the system comprising at least one processing unit; and a memory unit communicatively coupled to the processing unit, the memory unit comprising: a trajectory module configured to determine one or more driving trajectories for at least one vehicle in a region of interest based on time-shifted step functions generated from a driving state of the at least one vehicle; and an optimization module configured to select at least one driving trajectory from the driving trajectories based on a falsification optimization of the driving trajectories, wherein the processing unit is configured to execute the trajectory module and the optimization module to generate control signals that control the autonomous vehicle based on the at least one driving trajectory.

In yet another example, the object is achieved by a system for generating cut-in/cut-out scenarios for at least one autonomous vehicle, the system comprising: a processing unit; a memory comprising machine readable instructions stored as modules executable by the processing unit, the memory comprising: a trajectory scenario generator module configured to generate a set of scenarios for cut-in/cut-out maneuvers for vehicles based on time-shifted step functions generated from driving states associated with the vehicles, wherein the driving states are extracted by scanning driving patterns of the vehicles; a scenario optimization module configured to receive design requirements and regulatory requirements associated with the autonomous vehicle, wherein the scenario optimization module is configured to predict a subset of scenarios from the set of scenarios that satisfy the design requirements and the regulatory requirements.

Yet another example includes a computer program product including program instruction to be executed by at least one processor, wherein executing the program instruction causes the at least one processor to perform a method disclosed herein.

The present invention addresses the use case of testing autonomous vehicles using scenarios. The number of scenarios in autonomous vehicle simulation testing tend to grow exponentially with an increase in the number of scenario variables. Further, the present invention enables greater control of the autonomous vehicles when cut-in, cut-out traffic conditions are prevalent.

As used herein "cut-in" refers to a traffic scenario when a vehicle from the adjacent lane merges into the lane just in front of the autonomous vehicle. Further, "cut-out" refers to a vehicle in front leaves the lane abruptly, may be to avoid a stopped vehicle ahead or another road obstruction. Furthermore, "driving trajectory" is a prediction of behavior and movement of vehicles in a region of interest around the autonomous vehicle. The "region of interest" of the autonomous vehicle may be customized by a user testing response of the autonomous vehicle. Alternatively, the "region of interest" may be determined based on the design parameters/requirements of the autonomous vehicle.

The method of the present invention includes determining one or more driving trajectories for at least one vehicle in the region of interest based on time-shifted step functions generated from a driving state of the at least one vehicle. The method advantageously recognizes that the movement of the vehicles in the region of interest, particularly for cut-in and cut-out scenarios can be represented as step functions Therefore, the method advantageously limits the number of scenarios to be generated by restricting the driving trajectories based on the time-shifted step functions of driving parameters of the vehicle. In addition, by using the time-shifted step functions, driving trajectories for lane keeping and lane merging can be predicted.

In an embodiment, the method may include predicting the driving state of the vehicle based on at least one of vehicle velocity and vehicle acceleration. Further, the method may include generating the time-shifted step functions for the driving state. The method advantageously does not consider all possible forms of the driving trajectories in scenario generations. For example, the cut-in and cut-out vehicle trajectories of a sine wave or a random zigzag driving trajectory is represented using the time-shifted step functions of the vehicle velocity and/or the vehicle acceleration.

In an embodiment, the driving state may be predicted based on a cut-in timing and a cut-out timing of the vehicle. Accordingly, the method may include predicting at least one of a cut-in timing and a cut-out timing of the vehicle for a cut-in/cut-out manoeuvre of the vehicle; and predicting the driving state of the vehicle based on at least one of the cut-in timing and the cut-out timing. By predicting the driving state from the vehicle velocity, the vehicle acceleration and/or the cut-in/cut-out timing, the scenarios are significantly reduced. Thereby, making further refinement of the scenarios simpler.

The method also includes selecting at least one driving trajectory from the driving trajectories based on a falsification optimization of the driving trajectories. As used herein "falsification optimization" refers to optimization by the exclusion of impractical and infeasible scenarios. By the falsification optimization, the present invention advantageously minimizes the number of irrelevant scenarios. The combination of the time-shifted functions and the falsification optimization results in limited yet relevant scenarios that need to be tested. Consequently, the most probable driving trajectory (i.e. the at least one driving trajectory) for the vehicle is predicted.

To predict the at least one driving trajectory, the method may include determining whether the driving trajectories do not satisfy at least one of design requirements and regulatory restrictions associated with the autonomous vehicle. For example, the regulatory restrictions may be based on industry-standard test like the tests generated for Highway Assist systems support the driver in monotonous driving situations on motorways and may adapt the driving speed automatically according to curves in the road, speed limits and surrounding traffic. Euro NCAP has developed tests to assess their performance in critical traffic scenarios simulated on a test track environment.

The at least one driving trajectory may be predicted based on the step of predicting whether the driving trajectories result in non-practical outcomes, wherein the non-practical outcomes are identified based on physics-rules governing the autonomous vehicle. For example, scenarios which have trajectories do not look natural as real driving. In an embodiment, signals with regular brake and accelerator signals after each sample are flagged as non-practical outcomes.

In an embodiment, the falsification optimization may be performed by falsifying or due to falsification in at least one of environmental perception, trajectory planning, relative location, and synchronization. The falsification in the environmental perception may be determined based on the errors in the sensor data that perceive the environment around the autonomous vehicle. The falsification in the relative location and the trajectory planning may be determined based on error is communication between the autonomous vehicle and the vehicles in the region of interest. The falsification in the synchronization may be determined based on interference in the safety-critical coordination functions of the autonomous vehicle.

The method may include generating the falsification optimization based on a simulation of the falsifications in the environmental perception, the trajectory planning, the relative location, and the synchronization. The method advantageously simulates the adverse actions to determine the consequence of the falsifications. The consequences of the falsifications are optimized to generate the falsification optimization. In an embodiment, the optimization is performed by excluding the falsifications that result in non-practical outcomes or do not satisfy one of the design requirements and the regulatory requirements. The method may accordingly include selecting the at least one driving trajectory by excluding driving trajectories that do not satisfy one of the design requirements and the regulatory requirements or result in non-practical outcomes. Therefore, the present invention advantageously minimizes the number of irrelevant scenarios and thereby narrowing down the driving trajectories to the at least one driving trajectory.

The autonomous vehicle is then controlled based on the most probable driving trajectory. The method may include generating a driving decision for the autonomous vehicle based on the at least one driving trajectory. As used herein "driving decision" refers to a decision/control signal generated by the driving assistance system to control the autonomous vehicle. In an embodiment, the driving assistance system includes a control unit configured to receive instructions (with the driving decision) from the processing unit and communicatively coupled to actuating units of the autonomous vehicle. The control unit is configured to change at least one operating parameters of the actuating units based on the control signals/driving decision.

In some embodiments, the driving assistance system may include a programmable network interface configured to provide communication among at least one of sensing units of the autonomous vehicle, the actuating units and the control unit using one or more of wired and wireless communication standards. In other embodiments, the driving assistance system may include or may be communicatively coupled to actuating units configured to control the autonomous vehicle according to the modified operating parameters.

Accordingly, the present invention provides driver assistance even during cut-in and cut-out manoeuvres. Therefore, the driver is not necessitated to stay alert during such traffic conditions and is suitably guided by the driving assistance system.

The present invention also addresses concerns of Original Equipment Manufacturers (OEMs) to develop driver assistance systems that drives in cut-in and cut-out scenarios without making collision. The driving assistance development and testing may include multiple stages of developing the driving assistance functions, testing the functions for various scenarios and re-developing based on the test results. By refining the step of defining scenarios, the present invention enables OEMs to develop and test the driving assistance systems effectively, without consuming significant time and computational effort.

The present invention includes the system for generating cut-in/cut-out scenarios for the development and testing of the driving assistance system. The system comprises a processing unit; a memory comprising machine readable instructions stored as modules executable by the processing unit, the memory comprising: a trajectory scenario generator module configured to generate a set of scenarios for cut-in/cut-out maneuvers for vehicles based on time-shifted step functions generated from driving states associated with the vehicles; a scenario optimization module configured to receive design requirements and regulatory requirements associated with the autonomous vehicle, wherein the scenario optimization module is configured to predict a subset of scenarios from the set of scenarios that satisfy the design requirements and the regulatory requirements.

Through the present invention, the OEMs are able to leverage simulation results from a digital twin of the autonomous vehicle to reduce the number of scenarios. The system may include a design database configured to store the design requirements, the regulatory requirements, virtual models of the autonomous vehicle, wherein the design database is communicatively coupled to the processing unit; and a simulation module configured to simulate the set of scenarios according to physics of the autonomous vehicle, wherein the simulation module is configured to predict impractical scenarios that result in non-practical outcomes for the autonomous vehicle.

Further, the present invention enables a designer may be able to test autonomous vehicle/driving assistance system through a designer interface configured to display the set of scenarios and the subset of scenarios, wherein the designer interface is configured to enable interactive testing of autonomous vehicle by enabling modification of at least one of the subset of scenarios in run-time.

The object of the present invention may also be achieved by a method for generating cut-in/cut-out scenarios for autonomous vehicles. The method includes generating a set of scenarios for cut-in/cut-out manoeuvres for vehicles based on time-shifted step functions generated from driving states associated with the vehicles, wherein the driving states are extracted by scanning driving patterns of the vehicles; and predicting a subset of scenarios from the set of scenarios that satisfy the design requirements and the regulatory requirements associated with the autonomous vehicle. The present invention can also be used to analyse driving patterns for vehicles on the road. The approach systematically finds most relevant cut-in and cut-out scenarios by scanning the actual driving patterns. Therefore, the present invention considers practical situations while predicting/generating the set of scenarios.

The method may include storing the design requirements, the regulatory requirements, virtual models of the autonomous vehicle in the design database. Further, the method may include simulating the set of scenarios according to physics of the autonomous vehicles and predicting impractical scenarios that result in non-practical outcomes for the autonomous vehicles. Furthermore, the method may include displaying the set of scenarios and the subset of scenarios on the designer interface, to enable interactive testing of autonomous vehicle by enabling modification of at least one of the subset of scenarios in run-time.

Therefore, using the present invention the OEMs are able to effectively develop and test the autonomous vehicles even for challenging scenarios such as cut-in and cut-out maneuvers. The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: illustrates a representation of cut-in and cut-out manoeuvres as time-shifted functions, according to an embodiment of the present invention;
- FIG 2: illustrates optimization of driving trajectories using simulation, according to an embodiment of the present invention
- FIG 3: illustrates a block diagram of a driving assistance system, according to an embodiment of the present invention;
- FIG 4: illustrates a block diagram of a system for generating cut-in/cut-out scenarios for autonomous vehicles, according to an embodiment of the present invention; and
- FIG 5: illustrates method of controlling at least one autonomous vehicle, according to an embodiment of the present invention.

Hereinafter, embodiments for carrying out the present invention are described in detail. The various embodiments are de-scribed with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

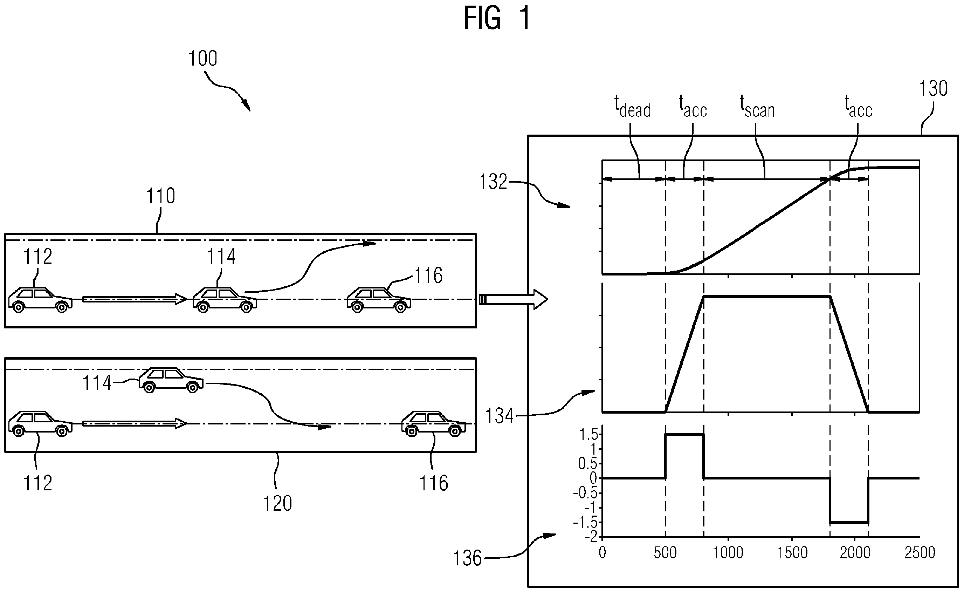

FIG 1 illustrates a representation 100 of cut-in 120 and cut-out 110 manoeuvres as time-shifted functions 130, according to an embodiment of the present invention. The cut-out manoeuvre 110 is indicated by the outward movement of the vehicle 114 in front of the autonomous vehicle 110. The autonomous vehicle 110 runs the risk of getting into an accident with the vehicle 116 in the cut-out manoeuvre 110. The cut-in manoeuvre 120 is indicated by the inward movement of the vehicle 114 between the autonomous vehicle 112 and the vehicle 116. In the cut-in manoeuvre 120, the autonomous vehicle 112 runs the risk of colliding with the vehicle 114.

The movement of the vehicle 114 is represented as time-shifted functions 130. For example, the time-shifted functions 130 may include a position trajectory 132 across time t_{dead}, t_{acc}, t_{scan} and t_{acc}. The time-shifted functions 130 includes the velocity shift 134 and the acceleration shift 136.

As shown in Fig 1, the velocity shift 134 and the acceleration shift 136 have a high relative degree in shift. The high relative degree of shift in across t_{dead}, t_{acc}, t_{scan} and t_{acc} enables accurate representation of the real-life scenario of a sudden inward or outward movement of the vehicle 114. Therefore, the present invention limits the number of driving trajectories possible for the vehicle 114 by generating the time-shifted functions 130 that considers higher relative degree. Accordingly, the lane change trajectories is generated from a combination of time-shifted step functions 130 based on acceleration and timing of cut-in cut-out.

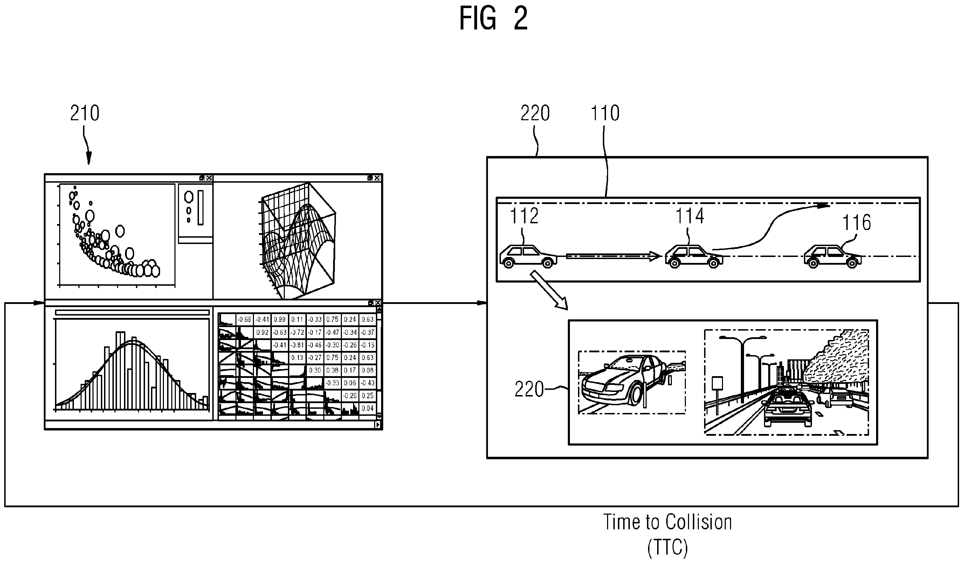

FIG 2 illustrates optimization of the driving trajectories using simulation 210, according to an embodiment of the present invention. The driving trajectories for the vehicle 114 identified using the time-shifted functions 130 can be further optimized using simulation 210.

In an embodiment, the simulation of the initial velocity of the autonomous vehicle 112, the velocity, position and the driving trajectories of the vehicle 114, and position of the vehicle 116 are simulated using simulations 210. The simulations 210 are generated by characterizing machine components particularly of the autonomous vehicle 112 and also in some embodiment components of the vehicle 114 and the vehicle 116. Further, the simulations 210 are embedded with the control engineering principles associated with the autonomous vehicle 112.

In the present invention, the simulation 210 includes of simulation of falsifications in the behavior of the autonomous vehicle 112 in terms of the environmental perception, the trajectory planning, the relative location, and the synchronization. The consequence of the falsifications are optimized to generate the falsification optimization. Accordingly, the simulations 210 are used to determine the falsifications that result in non-practical outcomes or do not satisfy one of the design requirements and the regulatory requirements.

For example, the design requirements include the contour, the ergonomic features, the material of the body associated with a model of the autonomous vehicle 112. The regulatory requirements may include protection regulations offered to the driver and passengers of the autonomous vehicle 112. The non-practical outcomes may include physically impossible outcomes such an abrupt change in velocity or acceleration.

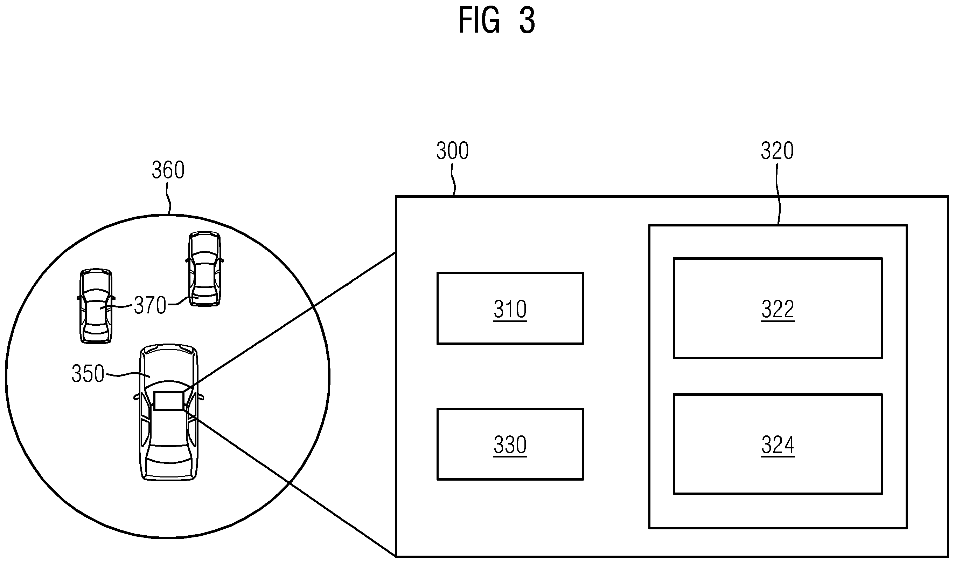

The simulations 210 are visualized on a user interface 220 that illustrate the consequence of the falsifications and a potential time to collision. Accordingly, a designer may modify parameters of the autonomous vehicle 112, such as break response time, to avoid potential collision/accident. FIG 3 illustrates a block diagram of a driving assistance system 300, according to an embodiment of the present invention. The driving assistance system 300 is part of an automobile 350.
The driving assistance system 300 comprises a processing unit 310, a memory unit 320 and a control unit 330. The driving assistance system 300 is communicatively coupled to sensor and actuator/actuating units of the automobile 350. Further, the automobile 350 may include a programmable network interface configured to provide communication among the sensors, the actuator units and the control unit 330 using one or more of wired and wireless communication standards.

The memory unit 320 comprises modules 322 and 324 that store machine readable instructions, which can be executed by the processing unit 310. The modules 322 and 324 include a trajectory module 322 and an optimization module 324.

When executed by the processing unit 310, the trajectory module 322 is configured to determine one or more driving trajectories for one or more vehicles 370 in a region of interest 360 based on time-shifted step functions generated from a driving state of the vehicles. In an embodiment, the trajectory module 322 is configured to define the region of interest 360 based on output from the sensor units. Further, the trajectory module 322 may be configured to predict the driving state of the vehicles 370 based on vehicle velocity and/or vehicle acceleration. In an embodiment, to predict the driving state of the vehicles 370, the trajectory module 322 is configured to predict a cut-in timing and/or a cut-out timing of the vehicles 370. The driving state of the vehicles 370 is predicted based on the cut-in timing and the cut-out timing, in addition to the vehicle velocity and the vehicle acceleration. Furthermore, the trajectory module 322 may be configured to generate the time-shifted step functions for the driving state. The generation of the time-shifted step functions represents the driving trajectories of the vehicles 370 in terms of higher relative degree of change. Thereby, enabling effective representation of cut-in and cut-out manoeuvres performed by vehicles 370 in the region of interest 360.

The optimization module 324 further optimizes the driving trajectories to identify most suitable driving trajectories for the vehicles 370. By limiting the number of driving trajectories, the driving assistance system 300 is able to generate a driving decision/control signals for the automobile 350. The optimization module 324 is configured to select at least one driving trajectory from the driving trajectories based on a falsification optimization of the driving trajectories for the vehicles 370. In an embodiment, the optimization module 324 is configured to generate the falsification optimization of the driving trajectories of the vehicles 370. The falsification optimization is generated determining whether the driving trajectories do not satisfy design requirements and/or regulatory restrictions associated with the autonomous vehicle. Further, the falsification optimization includes predicting whether the driving trajectories result in non-practical outcomes, wherein the non-practical outcomes are identified based on physics-rules governing the automobile 350. Furthermore, the optimization module 324 is configured to filter the driving trajectories to select the at least one driving trajectory for the vehicles 370 based on the falsification optimization. In an embodiment, the selection is performed by excluding driving trajectories that do not satisfy one of the design requirements and the regulatory requirements or result in non-practical outcomes.

As shown above, the driving assistance system 300 combines the time-shifted function analysis and the falsification optimization to narrow down the possible driving trajectories of the vehicles 370. Accordingly, in an embodiment, suitable control signals are generated by the control unit 330. The control unit 330 is further configured to change at least one operating parameters of the actuating units based on the control signals.

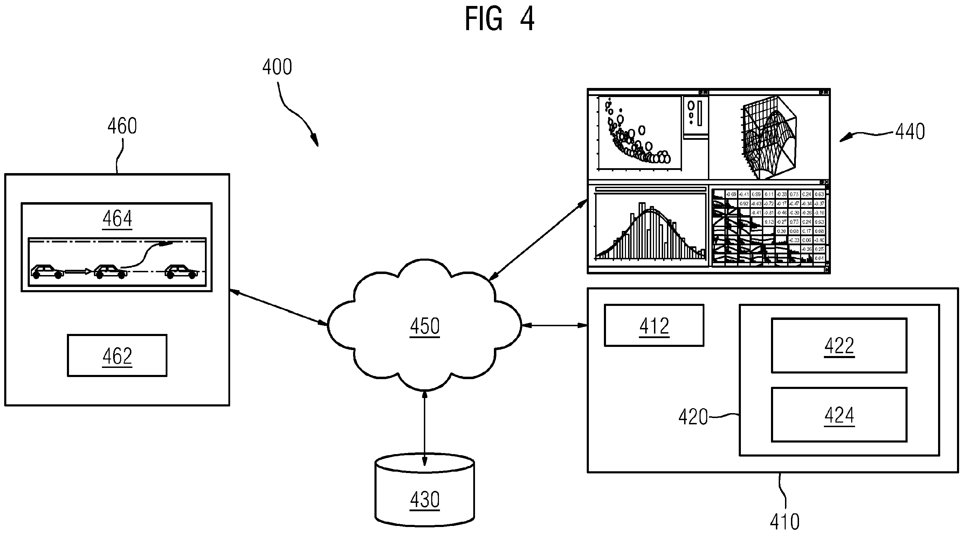

FIG 4 illustrates a block diagram of a system 400 for generating cut-in/cut-out scenarios for autonomous vehicles, according to an embodiment of the present invention. The system 400 includes a scenario generator server 410 hosted on a cloud computing platform 450. The system 400 may also include a simulation module 440 hosted on the computing platform 450 and communicatively coupled to a design database. The scenario generator server 410 is communicatively coupled to an on-road unit 460.

The scenario generator server 410 includes a processing unit 412, a memory 420 comprising machine readable instructions stored as modules 422 and 424 executable by the processing unit 412. The modules 422 and 424 are a trajectory scenario generator module 422 and a scenario optimization module 424, respectively. The scenario generator server 410 is configured to generate cut-in/cut-out scenarios for one or more autonomous vehicles.

The design database 430 stores design information and design parameters associated with the autonomous vehicles. For example, the design information may include contour of the vehicle, number of vehicle doors, passenger capacity, collision avoidance features, etc. The simulation module 440 is used to simulate generated cut-in/cut-out scenarios based on the design information, design parameters and regulatory requirements associated with the autonomous vehicle. For example, the regulatory requirements include ISO/PAS 21448:2019 Road Vehicles - Safety of the intended functionality (SOTIF), ISO 26262:2018 Road Vehicles - Functional safety, ISO/SAE CD 21434 Road Vehicles - Cybersecurity engineering, ISO 19157:2013 Geographic information - Data quality, ISO/TS 19158:2012 Geographic information - Quality assurance of data supply, etc. The simulation module 440 further simulates the cut-in/cut-out scenarios based on the physics based rules that govern the operation of the autonomous vehicles.

The on-road unit 460 refers to one or more computing resources that receives/stores traffic conditions from the road. The traffic conditions include audio, video, text and image data generated when scanning vehicular movement on the road. The on-road unit 460 includes a datastore 462 to store the traffic conditions and a display unit 464 to visualise the traffic conditions.

As shown in Fig. 4, the on-road unit 460 is communicatively coupled to the scenario generator server 410 via the cloud computing platform 450. The scenario generator server 410 is configured to receive the real-time traffic conditions from the on-road unit 460 to generate the cut-in/cut-out scenarios. The processing unit 410 executes the trajectory scenario generator module 422 is configured to generate a set of scenarios for cut-in/cut-out maneuvers of vehicles from the traffic conditions. The set of scenarios are generated based on time-shifted step functions generated from driving states associated with the vehicles. Accordingly, the trajectory scenario generator module 422 finds most relevant cut-in and cut-out scenarios by scanning the actual driving patterns of the vehicles. In addition, by using the time-shifted step functions high relative degree of change in the driving states are used to find most relevant set of scenarios that represent real-life driving experience.

Further, the scenario optimization module 424 is configured to receive the design requirements and the regulatory requirements associated with the autonomous vehicles. The scenario optimization module is configured to predict a subset of scenarios from the set of scenarios that satisfy the design requirements and the regulatory requirements by executing simulations on the simulation module 440. The simulations are used to refine the set of scenarios to exclude the scenarios that are impractical or do not satisfy the design requirements or the regulatory requirements. Accordingly, the scenario optimization module 424 outputs the subset of scenarios that enable an Original Equipment Manufacturer or a designer to develop and test Autonomous Driving Assistance Systems even for challenging traffic conditions such as cut-in and cut-out maneuvers.

In an embodiment, the display unit 464 also acts as designer interface that is configured to display the set of scenarios and the subset of scenarios. The designer interface is configured to enable interactive testing of autonomous vehicle by enabling the designer to modify the subset of scenarios in run-time.

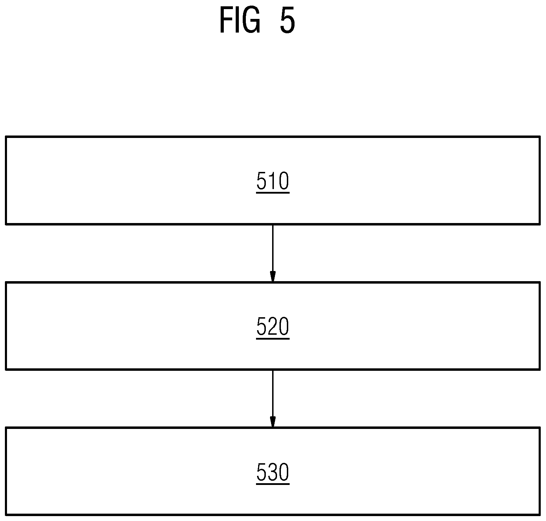

FIG 5 illustrates method of controlling at least one autonomous vehicle, according to an embodiment of the present invention. The method begins at step 510 by determining one or more driving trajectories for one or more vehicle in the region of interest around the autonomous vehicle based on time-shifted step functions generated from a driving state of the vehicles. To determine the driving trajectories, step 510 may include predicting the driving state of the vehicle based on at least one of vehicle velocity and vehicle acceleration. Further, the step 510 may include generating the time-shifted step functions for the driving state. In an embodiment, the driving state may be predicted based on a cut-in timing and a cut-out timing of the vehicle. Accordingly, step 510 may include predicting at least one of a cut-in timing and a cut-out timing of the vehicle for a cut-in/cut-out manoeuvre of the vehicle; and predicting the driving state of the vehicle based on at least one of the cut-in timing and the cut-out timing.

Step 520 includes selecting at least one driving trajectory from the driving trajectories based on a falsification optimization of the driving trajectories. Falsification optimization refers to optimization by the exclusion of impractical and infeasible scenarios. In an embodiment, step 520 may include determining whether the driving trajectories do not satisfy at least one of design requirements and regulatory restrictions associated with the autonomous vehicle. For example, the regulatory restrictions may be based on industry-standard test like the tests generated for Highway Assist systems, such as Euro NCAP. The tests are used to support the driver in monotonous driving situations on motorways and may adapt the driving speed automatically according to curves in the road, speed limits and surrounding traffic. Further, Euro NCAP has developed tests to assess their performance in critical traffic scenarios simulated on a test track environment. Accordingly, at step 520, the driving trajectories are refined to select only the at least one driving trajectory that satisfies the regulatory requirement.

Further at step 520, the at least one driving trajectory is predicted based on a simulation of whether the driving trajectories result in non-practical outcomes, wherein the non-practical outcomes are identified based on physics-rules governing the autonomous vehicle. For example, signals with regular brake and accelerator signals after each sample are flagged as non-practical outcomes.

Step 530 includes controlling the autonomous vehicle based on the at least one driving trajectory. The at least one driving trajectory is used to generate a driving decision or control signals by which the autonomous vehicle can be controlled. Step 530 may additionally include generating a driving decision for the autonomous vehicle based on the at least one driving trajectory. In an embodiment, step 530 further includes modifying at least one operating parameters of the actuating units of the autonomous vehicle based on the driving decision.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or de-vice) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination there-of) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.

## Claims

1. A computer implemented method of controlling at least one autonomous vehicle (112, 350), the method comprising:
determining one or more driving trajectories for at least one vehicle (370) in a region of interest (360) based on time-shifted step functions generated from a driving state of the at least one vehicle (370);
selecting at least one driving trajectory from the driving trajectories based on a falsification optimization of the driving trajectories; and
controlling the autonomous vehicle (112, 350) based on the at least one driving trajectory.

2. The method according to claim 1, further comprising:
generating a driving decision for the autonomous vehicle (112, 350) based on the at least one driving trajectory.

3. The method according to claim 1, further comprising:
predicting the driving state of the vehicle (370) based on at least one of vehicle velocity and vehicle acceleration; and
generating the time-shifted step functions for the driving state.

4. The method according to claim 1, further comprising:
predicting at least one of a cut-in timing and a cut-out timing of the vehicle (370) for a cut-in/cut-out maneuver of the vehicle; and
predicting the driving state of the vehicle based on at least one of the cut-in timing and the cut-out timing.

5. The method according to claim 1, further comprising generating the falsification optimization of the driving trajectories of the vehicle by:
determining whether the driving trajectories do not satisfy at least one of design requirements and regulatory restrictions associated with the autonomous vehicle (112, 350) ;
predicting whether the driving trajectories result in non-practical outcomes, wherein the non-practical outcomes are identified based on physics-rules governing the autonomous vehicle (112, 350).

6. The method according to one of claim 1 and claim 5, wherein selecting at least one driving trajectory from the driving trajectories based on the falsification optimization comprises:
selecting the at least one driving trajectory by excluding driving trajectories that do not satisfy one of the design requirements and the regulatory requirements or result in non-practical outcomes.

7. A driving assistance system (300) for controlling an autonomous vehicle (112, 350), the system comprising:
at least one processing unit (310); and
a memory unit (320) communicatively coupled to the processing unit, the memory unit comprising:
a trajectory module (322) configured to determine one or more driving trajectories for at least one vehicle (370) in a region of interest (360) based on time-shifted step functions generated from a driving state of the at least one vehicle (370); and
an optimization module (324) configured to select at least one driving trajectory from the driving trajectories based on a falsification optimization of the driving trajectories,
wherein the processing unit is configured to execute the trajectory module and the optimization module to generate control signals that control the autonomous vehicle (112, 350) based on the at least one driving trajectory.

8. The system according to claim 7, further comprising:
a control unit (330) configured to receive instructions from the processing unit and communicatively coupled to actuating units of the autonomous vehicle (112, 350), wherein the control unit is configured to change at least one operating parameters of the actuating units based on the control signals.

9. The system according to claim 7, further comprising:
a programmable network interface configured to provide communication among at least one of sensing units of the autonomous vehicle (112, 350), the actuating units and the control unit using one or more of wired and wireless communication standards; and
the actuating units configured to control the autonomous vehicle (112, 350) according to the modified operating parameters.

10. A system (400) for generating cut-in/cut-out scenarios for at least one autonomous vehicle (112, 350), the system comprising:
a processing unit (410);
a memory (420) comprising machine readable instructions stored as modules executable by the processing unit, the memory comprising:
a trajectory scenario generator module (422) configured to generate a set of scenarios for cut-in/cut-out maneuvers for vehicles based on time-shifted step functions generated from driving states associated with the vehicles, wherein the driving states are extracted by scanning driving patterns of the vehicles; and
a scenario optimization module (424) configured to receive design requirements and regulatory requirements associated with the autonomous vehicle (112, 350), wherein the scenario optimization module is configured to predict a subset of scenarios from the set of scenarios that satisfy the design requirements and the regulatory requirements.

11. The system according to claim 10, further comprising:
a design database (430) configured to store the design requirements, the regulatory requirements, virtual models of the autonomous vehicle (112, 350), wherein the design database is communicatively coupled to the processing unit; and
a simulation module (440) configured to simulate the set of scenarios according to physics of the autonomous vehicle (112, 350), wherein the simulation module is configured to predict impractical scenarios that result in non-practical outcomes for the autonomous vehicle (112, 350).

12. The system according to claim 10, further comprising:
a designer interface (464) configured to display the set of scenarios and the subset of scenarios, wherein the designer interface is configured to enable interactive testing of autonomous vehicle (112, 350) by enabling modification of at least one of the subset of scenarios in run-time.

13. A computer program product including program instruction to be executed by at least one processor (310, 410), wherein executing the program instruction causes the at least one processor (310, 410) to perform a method according to at least one of claims 1-6.
